# EUROPÄISCHE PATENTSCHRIFT

(11) **EP 2 428 301 B1**
(45) Veröffentlichungstag und Bekanntmachung des Hinweises auf die Patenterteilung: **26.12.2012**
(21) Anmeldenummer: 11184773.7
(22) Anmeldetag: 02.03.2009
(51) Int. Cl.: B23K 9/04, B21B 27/03, B22D 11/128, B23K 35/02, B23K 35/30, C22C 38/18, C22C 38/26, C22C 38/48

(54) **Rolle zum Stützen und Transportieren von heißem Gut mit einer Auftragsschweißung ; Schweißzusatzwerkstoff zum Herstellen einer Auftragschweißung auf einer Bauteiloberfläche**
Roller for supporting and transporting hot goods with a clad welding layer ; Welding material for use in building-up welding on a surface of a workpiece
Rouleau pour soutenir et transporter des produits chauds à l'aide d'un rechargement par soudage ; Matériau de soudage pour effectuer des revêtements sur la surface d'une pièce

(30) Priorität: 22.04.2008 AT 6382008
(43) Veröffentlichungstag der Anmeldung: 14.03.2012
(62) Teilanmeldung aus: 09734997.1
(73) Patentinhaber: Siemens VAI Metals Technologies GmbH, 4031 Linz (AT)
(72) Erfinder: Lechner, Stefan, 4060 Leonding (AT); Lekic-Ninic, Marinko, 4030 Linz (AT); Poeppl, Johann, 4202 Kirchschlag (AT); Shan, Guoxin, 4020 Linz (AT); Thoene, Heinrich, 4020 Linz (AT); Tmka, Karl, 8605 Kapfenberg (AT); Wimmer, Franz, 4752 Riedau (AT)
(74) Vertreter: Maier, Daniel Oliver

(56) Entgegenhaltungen:
- GB-A- 1 475 300
- GB-A- 2 368 849
- JP-A- 58 184 094
- US-A- 4 609 577

## Beschreibung

Die Erfindung betrifft eine Rolle zum Stützen und Transportieren von heißem Gut auf einem Rollgang oder in einer Stranggießmaschine mit einem Rollenkörper gemäß dem Oberbegriff des Anspruchs 1 (siehe, 2.B., US 4 609 577).

Weiters umfasst die Erfindung einen Schweißzusatzwerkstoff gemäß dem Oberbegriff des Anspruchs 4 (siehe, z.B., GB2 368 849), und einen Schweißdraht zum Herstellen der Auftragsschweißung auf einer Bauteiloberfläche einer Rolle, welche einen speziellen Schweißzusatzwerkstoff umfasst (siche Anspruch 7).

Rollen dieser Art sind besonders geeignet zum Stützen und Transportieren von gegossenen Metallsträngen, insbesondere Stahlsträngen, in der Strangführung einer Stranggießanlage, unmittelbar im Anschluss an die Stranggießkokille, und auf der Gießanlage nachgeordneten Rollgängen. Speziell bei Brammenstranggießanlagen sind die Stützrollen in der Strangführung hohen mechanischen Belastungen im Hochtemperaturbereich ausgesetzt. Dies führt zu vermehrtem Verschleiß an der Rollenmanteloberfläche, zu Korrosionserscheinungen und mechanischen Beschädigungen. Rollen dieser Art sind weiters generell in metallurgischen Anlagen einsetzbar, wenn schwere und heiße Güter, wie Brammen, Blöcke, Knüppel, Bandmaterial, Walzgut, etc. zwischen einzelnen Weiterverarbeitungseinrichtungen, Speicher- und Stapeleinrichtungen, insbesondere auch im Bereich von Walzwerken, transportiert werden.

### Stand der Technik

Aus der DE 38 23 655 A1 ist bereits eine Stütz- und/oder Transportwalze zum Transport von heißen Metallsträngen in einer Stranggießanlage bekannt, die im Wesentlichen aus einem Walzenkern und einer Walzenhülse besteht, wobei diese beiden Bauteile ineinander verschraubt sind. Auf der Walzenhülse ist eine Auftragsschweißung aufgebracht, für deren Durchführung Schweißparameter so gewählt sind, dass beim Schweißen des Schutzauftrages auf die äußere Mantelfläche der Walzenhülse gleichzeitig ein Verbindungsschweißen zwischen Kern und Hülse durchgeführt wird. Die Auftragsschweißung ist durch sich eng aneinander legende Schweißraupen in Achsrichtung der Stützwalze oder in Form einer Schraubenlinie entlang der Mantelfläche der Stützwalze gebildet. Damit wird eine verschleißresistente Oberfläche und eine feste Verbindung zwischen Hülse und Kern erzielt.

Aus der DE 32 23 908 A1 ist eine Strangführungsrolle bekannt, deren Walzenkörper mit einer Auftragsschweißung versehen ist. Die Auftragsschweißung umfasst eine Vielzahl von eng aneinander angeordneten Schweißraupen, die in Umfangsrichtung des Walzenkörpers wellenförmig aufgetragen sind. Die Auftragsschweißung ist nachbearbeitet, um eine glatte, zylindrische und rissfreie Oberfläche zu erzielen. Angaben zur chemischen Zusammensetzung des Grundwerkstoffes und des Werkstoffes der aufgeschweißten Verschleißschicht hinsichtlich einer Optimierung der Materialeigenschaften der Strangführungsrolle sind dieser Schrift nicht zu entnehmen.

Aus der US 4,532,978 A ist eine Transportrolle für heiße Metallstücke mit einer durch eine Auftragsschweißung, durch eine thermische Aufspritzung oder durch eine Schrumpfverbindung erzeugte äußere Mantelschicht bekannt, wobei diese äußere Mantelschicht von einem ferritischen Stahl mit weniger als 0, 1 % C, 10,0 - 14,0% Cr und 0,4 ― 1,0 % Nb, Rest Eisen und herstellungsbedingte Verunreinigungen, gebildet ist. Durch die Kombination der Legierungsanteile Cr und Nb wird eine verbesserte Resistenz der Oberflächenschicht einer Transportrolle hinsichtlich Korrosion, Oxidation und Rissanfälligkeit erreicht. Nähere Angaben zum strukturellen Aufbau der durch eine Auftragsschweißung gebildeten äußeren Mantelschicht sind aus diesem Dokument nicht zu entnehmen.

Auftragschweißungen sind generell durch das Aufbringen einer fest haftenden Schicht auf einer Bauteiloberfläche über den Schmelzfluss gekennzeichnet. Diese Schicht dient neben der Herstellung einer verschleißfesten Oberfläche oder deren Wiederherstellung nach einer bestimmten Einsatzzeit vor allem zum Panzern (Verschleißschutz), zum Plattieren (Korrosionsschutz) und zum Puffern (Bilden von Zwischenlagen) von Bauteiloberflächen.

Beim Auftragsschweißen dient der Bauteilgrundkörper als Träger mit ausreichend elastischen Eigenschaften, während die Beschichtung als Funktionsoberfläche das Bauteil vor Schädigungen durch intensive Beanspruchungen, bestehend aus Korrosion, Verschleiß und/oder Temperatur, schützen soll. Das Auftragschweißen vereinigt Vorteile, wie geringe Abhängigkeit von der Bauteilgeometrie, gute Haftung zwischen Trägermaterial und Beschichtung, dichte Schichten, sowie gute Wärmeleitung von der Auftragschweißung in das Bauteil. Durch den abrasiven und erosiven Verschleiß an derartigen Bauteilen, speziell an Stranggießrollen einer Stranggießanlage, werden heute erhebliche volkswirtschaftliche Verluste verursacht, die sich aus einem großen Instandhaltungsaufwand ergeben.

Um beispielsweise die geforderte Standzeit von Strangführungssrollen bezüglich Oberflächenverschleiß zu gewährleisten, die derzeit üblicherweise bei ca. 300.000 Tonnen produzierten Metallstrangs im Eingangsbereich der Strangführung (an die Kokille anschließender Bereich) bzw. 5,0 Mio Tonnen im Auslaufbereich aus der Strangführung liegt, muss eine Aufschweißung nach dem Stand der Technik folgende Eigenschaften aufweisen:
- Rostfreie Aufschweißung mit martensitischem Gefüge,
- Härte von 44 ― 50 HRC,
- Hohe Korrosionsbeständigkeit der Schweißschicht durch einen Legierungsanteil von mindestens 12,5 % Cr,
- Hitze- und Brandrissbeständigkeit,
- Ein möglichst geringer Delta-Ferritanteil von max. 10%. Ideal wären 0% Delta-Ferritanteil, um eine hohe interkristalline Korrosionsfestigkeit zu gewährleisten. Aus werkstoff- und schweißtechnischen Gründen ist dies nur schwer zu erzielen. In der Praxis wird deshalb ein Delta-Ferritanteil von bis zu 10% akzeptiert.

Diese Eigenschaften sollen an der oberflächennahen Funktionsoberfläche in ausreichender Schichtdicke der durchgeführten Aufschweißung vorhanden sein, damit die Oberfläche nach Erreichen einer zulässigen Verschleißgrenze noch qualitativ hochwertig nachgearbeitet werden kann, insbesondere ohne dass der Rollenmantel im Bereich des Grundwerkstoffes beeinträchtigt oder geschwächt wird.

Die Gefügeausbildung und Beschaffenheit dieser durch Aufschweißung erzeugten oberflächennahen Funktionsoberfläche ist von der Beschaffenheit des Rollenmantel-Grundwerkstoffes, der Beschaffenheit des Schweißzusatzwerkstoffes und gegebenenfalls vom Aufschweißvorgang selbst abhängig. Während des Schweißvorganges kommt es zwischen dem aufgeschmolzenen Grundwerkstoff und dem vom Schweißdraht abschmelzenden Schweißzusatzwerkstoff zu einer Mischung der beiden Komponenten, die als Aufmischung bezeichnet wird. Der gegebene Aufmischungsvorgang des Schweißzusatzwerkstoffes mit dem Grundwerkstoff wird durch in der Praxis unvermeidliche Werkstoff- und Schweißparameterstreuung stark beeinflusst. Der Aufmischungsvorgang entscheidet allerdings wesentlich, ob obige Anforderungen an die Aufschweißung erreicht werden.

Zur Erzielung von ausreichend großen Verschleißschichten mit konstanten Materialeigenschaften, ist es beispielsweise aus der JP 10-314938 A2 bereits bekannt, Mehrlagenschweißungen durchzuführen. Damit stellt sich die Problematik der Aufmischung und damit unterschiedlicher Werkstoffeigenschaften in markanter Weise ausschließlich in der ersten Lage der Aufschweißung. In der zweiten und den weiteren Lagen der Aufschweißung tritt dieses Problem nicht mehr auf. Allerdings erhöhen sich der Arbeitszeitaufwand für die Durchführung der Aufschweißung und der notwendige Energieverbrauch durch das Schweißaggregat markant in Abhängigkeit von der Schweißlagenanzahl.

Aus der JP 11-000747 A2 ist eine Stützrolle mit einer einlagigen Aufschweißung bekannt, bei der in einem nachfolgenden Bearbeitungsvorgang lediglich Kuppen der Schweißraupen abgeschliffen werden, wodurch eine zylindrische Mantelfläche erzeugt wird, die jedoch nur in Teilbereichen eine das heiße Transportgut tragende Funktionsoberfläche aufweist. Die nicht bearbeitete Schweißraupenoberfläche verstärkt die Rissbildungsgefahr durch ungleiche Belastungsbilder und ungleichen Wärmeübergang vom heißen Transportgut in die Stützrolle. Zur Qualität der Aufschweißung, insbesondere zur Gleichmäßigkeit der Materialeigenschaften in der Aufschweißung und der Zusammensetzung des Schweißzusatzwerkstoffes fehlen entsprechende Angabe in der J P 11-000747 A2.

### Darstellung der Erfindung

Aufgabe der vorliegenden Erfindung ist es daher, die Nachteile des bekannten Standes der Technik zu vermeiden und eine Rolle zum Stützen und Transportieren von heißem Gut sowie einen Schweißzusatzwerkstoff und einen Schweißdraht bzw. eine Schweißelektrode zur Herstellung einer Verschleißschicht auf einer entsprechenden Bauteiloberfläche oder einer Rolle vorzuschlagen, wobei die Standzeit der Verschleißschicht vergrößert, die Verschleißfestigkeit verbessert und die Herstellkosten der Aufschweißung reduziert werden.

Eine Rolle gemäß der Erfindung ist im Anspruch 1 definiert.

Alle Angaben von Legierungsbestandteilen in diesem Dokument beziehen sich auf Masseprozente.

Durch die Auswahl eines Grundwerkstoffes für den Rollenmantel, der einen Stahl mit höherem C-Gehalt aufweist, wird grundsätzlich die Festigkeit des Rollenmantels erhöht. Zusätzlich verhalten sich Stähle mit höherem C-Gehalt beim Aufschweißen sensibler hinsichtlich der Konstanz in der Gefügezusammensetzung. Durch Anwendung eines speziell auf den Grundwerkstoff abgestimmten Schweißzusatzwerkstoffes kann mit einer Auftragschweißung, die ausschließlich als Einlagenschweißung durchgeführt wird, eine ausgeprägte Verschleißschicht auf dem Grundmaterial erzeugt werden, die in einem äußeren, außergewöhnlich dicken Bereich eine gleichmäßige Gefügezusammensetzung aufweist. Diese Verschleißschicht weist auch nach Durchführung einer notwendigen mechanischen Oberflächenbearbeitung in einem die Rollenmanteloberfläche einschließenden Bereich eine konstante Gefügezusammensetzung mit 12,5 bis 14,0% Cr auf. Der Einfluss der naturgegebenen Streuung von Einsatzstoffen während des Aufschweißvorganges, speziell die Aufmischung, kann durch die besondere Abstimmung von Grundwerkstoff und Schweißzusatzwerkstoff auch bei nur einer Schweißlage auf ein beherrschbares Maß reduziert werden, sodass für den speziellen Anwendungsfall eine ausreichende Schicht mit gleichbleibenden Materialeigenschaften verbleibt. Die bisher in der Praxis für die Einschränkung der Aufmischung notwendige Pufferschicht kann damit eingespart werden.

Die Materialeigenschaften der Verschleißschicht werden weiter verbessert, wenn die Verschleißschicht zumindest in dem äußeren, die Rollenmanteloberfläche einschließenden Bereich 0,10 bis 0,18% Nb aufweist. Durch die Zugabe von Nb in den Schweißzusatzwerkstoff wird das einlagige Aufschweißverfahren auch für die höherkohligen Rollengrundwerkstoffe mit bis zu 0,45% C sicher anwendbar. Niob bindet speziell den Kohlenstoff der höherkohligen Grundwerkstoffe ab und gewährleistet damit deren Schweißbarkeit. Bei niedrigkohligen Grundwerkstoffen erweist sich der Niobanteil nicht als nachteilig, sodass bei Zugabe von Nb im vorgeschlagenen Bereich mit ein und demselben Schweißzusatzwerkstoff alle gängigen Rollengrundwerkstoffe geschweißt werden können.

Gemäß der Erfindung weist die Verschleißschicht zumindest in dem äußeren, die Rollenmanteloberfläche einschließenden Bereich folgende Zusammensetzung auf:
12,5 bis 14,0 % Cr
0,10 bis 0,18% Nb
3,4 bis 4,5 % Ni
0,6 bis1,0 % Mo
0,12 % N
0,7 % Si
0,6 bis 1,2 % Mn
0,06 bis 0,14 % C
max. 0,025 % S
max. 0,025 % P
Rest Fe und herstellungsbedingte Verunreinigungen
wobei die Streubreite der einzelnen Legierungsanteile +/- 5% beträgt.

Beim einlagigen Aufschweißen wird angestrebt, dass der Anteil an Deltaferrit in der Verschleißschicht, zumindest in dem äußeren, die Rollenmanteloberfläche einschließenden Bereich, weniger als 10 %, vorzugsweise weniger als 5%, beträgt. Je geringer der Anteil an Deltaferrit in der Verschleißschicht ist, desto höher ist in diesem Bereich die interkristalline Korrosionsfestigkeit. Der Anteil an Deltaferrit steigt mit dem Cr-Gehalt, sodass ein Cr-Gehalt > 14,0% zu einem unerwünscht hohem Anteil an Deltaferrit führt.

Ein wesentlicher Vorteil der erfindungsgemäßen Rolle besteht darin, dass der die Rollenmanteloberfläche einschließende Bereich der Verschleißschicht in einem Dickenbereich von mindestens 1,5 mm, vorzugsweise in einem Dickenbereich von mindestens 2,5 mm, eine gleichbleibende chemische Zusammensetzung aufweist.

Gegenstand der Erfindung ist weiters ein Schweißzusatzwerkstoff zum Herstellen einer Auftragsschweißung auf einer Bauteiloberflächel gemäß Anspruch 4.

Ein erfindungsgemässes Schweißzusatzwerkstoff weist folgende chemische Analyse auf: 16,5 bis 19,0 % Cr; 0,15 bis 0,20 % Nb; 4,0 bis 4,5 % Ni; 1,0 % Mo; 0,12 % N; 0,7 % Si; 1,2 % Mn; 0,03 % C; max. 0,025 % S; max. 0,025 % P; Rest Fe und herstellungsbedingte Verunreinigungen, wobei die Streubreite der einzelnen Legierungsanteile +/- 5% beträgt.

Bei einem Schweißzusatzwerkstoff, der 16,5 bis 17,0 % Cr; 0,15 bis 0,20 % Nb; 4,0% Ni; 1,0 % Mo; 0,12 % N; 0,7 % Si; 1,2 % Mn; 0,03 % C; max. 0,025 % S; max. 0,025 % P; Rest Fe und herstellungsbedingte Verunreinigungen aufweist, wobei die Streubreite der einzelnen Legierungsanteile +/- 5% beträgt, kann die Aufmischung mit einer einlagigen Aufschweißung auf einen Wert von 25 bis 30% eingestellt werden. Bei einer Streubreite von +/- 5% liegt der tolerierbare Wert für den Si-Gehalt von 0,7 % demnach zwischen 0,665% und 0,735% Si.

Bei einem Schweißzusatzwerkstoff, der 18,5 bis 19,0 % Cr; 0,15 bis 0,20 % Nb; 4,5% Ni; 1,0 % Mo; 0,12 % N; 0,7 % Si; 1,2 % Mn; 0,03 % C; max. 0,025 % S; max. 0,025 % P; Rest Fe und herstellungsbedingte Verunreinigungen aufweist, wobei die Streubreite der einzelnen Legierungsanteile +/- 5% beträgt, kann die Aufmischung mit einer einlagigen Aufschweißung auf einen Wert von 30 bis 35% eingestellt werden.

Ein Schweißdraht zur Durchführung einer Auftragschweißung auf einer Bauteiloberfläche, vorzugsweise auf einem Rollenmantel einer Rolle zum Stützen und Transportieren von heißem Gut, insbesondere von stranggegossenen Stahlsträngen auf einem Rollgang oder in einer Stranggießmaschine ist dadurch gekennzeichnet, dass der Schweißdraht einen Schweißzusatzwerkstoff mit einer chemischen Zusammensetzung nach einem der Ansprüche 4 bis 6 umfasst. Der Schweißdraht ist hierbei so ausgebildet, dass er für den maschinellen Einsatz bei einem Open-Arc-Aufschweißverfahren, bei einem Unter-Pulver-Aufschweißverfahren oder bei einem Schutzgasschweißverfahren geeignet ist.

### Kurzbeschreibung der Zeichnungen

Weitere Vorteile und Merkmale der vorliegenden Erfindung ergeben sich aus der nachfolgenden Beschreibung nicht einschränkender Ausführungsbeispiele, wobei auf die folgenden Figuren Bezug genommen wird, die folgendes zeigen:
- Fig. 1: die geometrischen Zusammenhänge bei der Erzeugung einer Verschleißschicht durch eine Einlagenschweißung auf einer Rolle zum Stützen und Transportieren von heißem Gut,
- Fig. 2: den Verlauf des Schweißraupenaufbaus auf der Rollenmanteloberfläche auf einer Rolle zum Stützen und Transportieren von heißem Gut,
- Fig. 3: die Oberfläche der Aufschweißung auf einer Bauteiloberfläche oder Rolle,
- Fig. 4: Schliffbild der Schweißverbindung,
- Fig. 5: die geometrischen Zusammenhänge bei der Erzeugung einer Verschleißschicht durch eine Einlagenschweißung beim Widerherstellen einer Rolle zum Stützen und Transportieren von heißem Gut,
- Fig. 6: die geometrischen Zusammenhänge bei der Erzeugung einer Verschleißschicht durch eine Einlagenschweißung auf einer Aufbaulage beim Widerherstellen einer Rolle zum Stützen und Transportieren von heißem Gut.

### Ausführung der Erfindung

Die Bauteiloberfläche oder der Rollenmantel einer Rolle zum Stützen und Transportieren von heißem Gut, speziell von Stranggussprodukten, weist als Grundwerkstoff Stahl auf. Bauteiloberflächen und Rollenmäntel für die erfindungsgemäße Aufschweißung bestehen bevorzugt aus 42CrMo4 oder 16CrMoV511 nach DIN 10083 und sind vergütet. Ein weiterer günstiger Grundwerkstoff für diese Anwendung ist St52-3, nach DIN 10025.

### Beispiel:

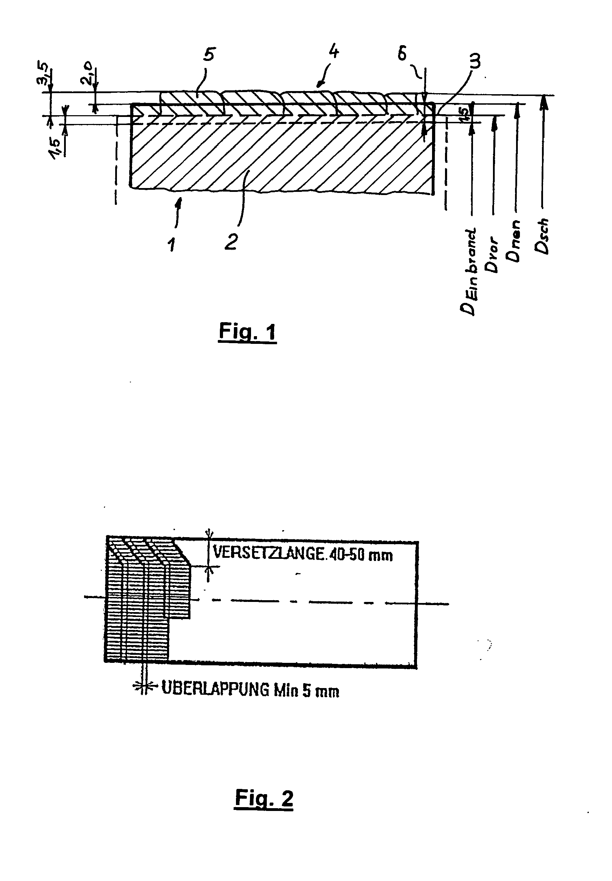

Bei einer Einlagenaufschweißung auf einem Rollenmantel aus 42CrMo4 mit einem Schweißzusatzwerkstoff, der 0,03%C, 0,7%Si, 17,5%Cr, 4,0%Ni, 1,2%Mn, 1,0%Mo, 0,17%Nb und 0,12%N aufweist, verbleibt nach dem Rückdrehen der Aufschweißschicht auf eine geschlossenen einflächige Rollenmanteloberfläche eine Verschleißschicht mit gleicher chemischen Analyse in einer Schichtdicke von 3,0 mm. Diese Verschleißschicht weist dann folgende chemische Zusammensetzung auf: 13,87%Cr; 0,15%Nb; 4,0%Ni; 0,61%Mo; 0,10%N; 0,54%Si; 0,96%Mn; 0,06%C, 0,001%S, 0,043%P; Rest Eisen und herstellungsbedingte Verunreinigungen. Die Aufschweißung erfolgt nach dem Open-Arc-Schweißverfahren auf der auf 100°C vorgewärmten Rollenmanteloberfläche mit einem Schweißdraht mit 2,4 mm Drahtdurchmesser und einer Schweißdrahtzuführgeschwindigkeit von 6,0 m/min. Die Aufschweißung erfolgt mit einer Pendelfrequenz des Schweißbrenners von 35 Zyklen/min und einer Pendelbreite von 25mm bei einer Überlappung der Schweißraupen von 5 mm. Es wird stets ein einzelner Schweißdraht verwendet. In den Figuren 1 und 2 sind die geometrischen Zusammenhänge näher veranschaulicht.

Figur 1 zeigt in einem Teilschnitt einen aus dem Grundwerkstoff (St52-3) gefertigten Rollenmantel 2 einer Strangführungsrolle 1 mit einer auf das Vordrehmaß Dᵥₒᵣ vorbereiteten Rollenmanteloberfläche 3. Auf dieser erfolgt die einlagige Aufschweißung 4, wie zuvor beschrieben, mit der eine wendelförmig umlaufende Schweißraupe 5 erzeugt wird, wobei der Rollendurchmesser auf den Schweißdurchmesser D_{sch} zunimmt und eine Schichtdicke von 3,5 mm aufgetragen wird. Gleichzeitig bildet sich ein Einbrand im Ausmaß von 1,5 mm bis zum Einbranddurchmesser D_{Einbrand}. Nach dem Rückdrehen der Aufschweißung im Ausmaß von 2 mm bis auf den Rollennenndurchmesser Dₙₑₙ verbleibt eine Verschleißschicht 6 mit einer Schichtdicke von 3mm mit im Wesentlichen gleicher chemischen Zusammensetzung und gleichen Werkstoffeigenschaften. Die Pendelbreite beträgt 25 mm.

Figur 2 veranschaulicht den Schweißraupenaufbau auf der Rollenmanteloberfläche mit der am Rollenmantel umlaufenden Schweißraupe mit der Überlappung von etwa 5 mm und einer Versetzungslage in einem Längenbereich von etwa 40 bis 50 mm, am Rollenumfang gemessen.

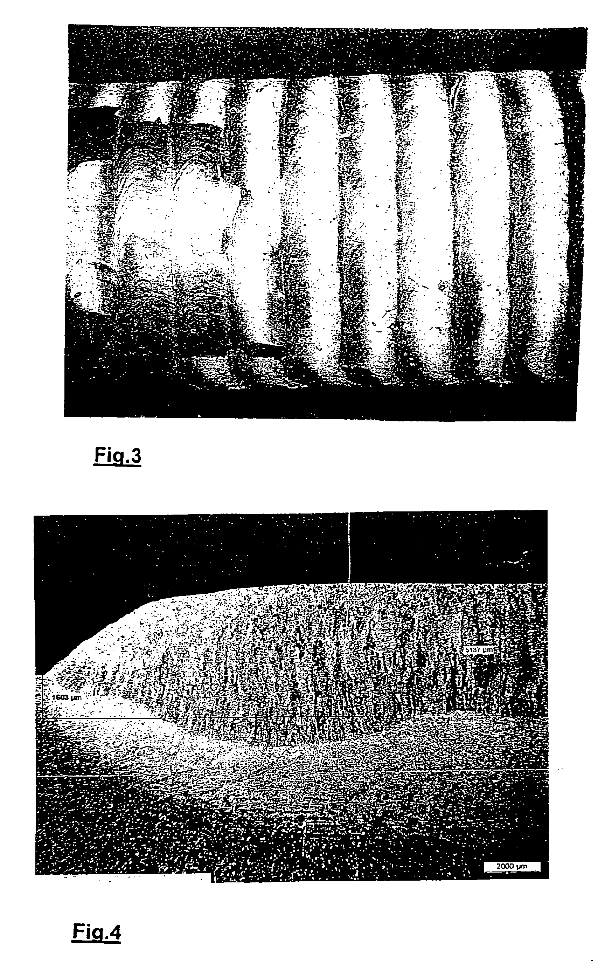

Figur 3 zeigt in einer fotographischen Darstellung die Oberfläche der Aufschweißung mit überlappend angeordneten Schweißraupen entsprechend dem Schweißdurchmesser D_{sch} in Figur 1.. Figur 4 veranschaulicht in einem Schliffbild die Qualität der Aufschweißung und die qualitativ hochwertige Bindung des Schweißzusatzwerkstoffes an den Grundwerkstoff in der Einbrandzone.

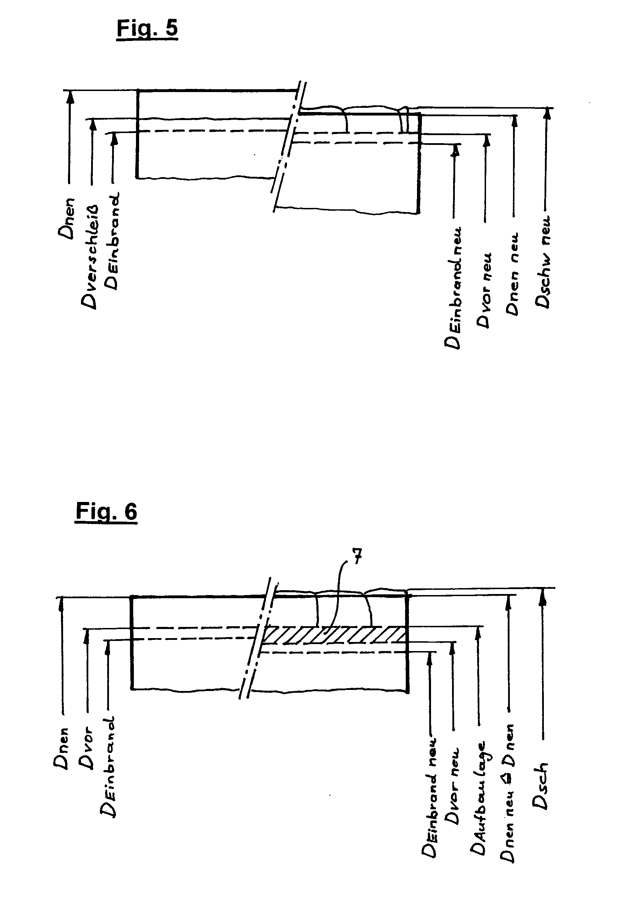

Die Figuren 5 und 6 zeigen in zwei Ausführungsbeispielen Möglichkeiten für die Umsetzung des Verfahrens zur Wiederherstellung einer während des laufenden Betriebes einer Stranggießanlage abgenützten Rolle zum Stützen und Transportieren eines heißen Metallstranges.

In der linken Bildhälfte der Figur 5 ist eine Strangführungsrolle mit einer durch eine einlagige Aufschweißung erzeugte Verschleißschicht dargestellt. Die Verschleißschicht ist durch den Nenndurchmesser Dₙₑₙ der Rolle und den Einbranddurchmesser D_{Einbrand} in ihrer radialen Erstreckung begrenzt. Zusätzlich ist der Verschleißdurchmesser D_{Verschleiß}, der den Rollendurchmesser mit Ablauf der Standzeit der Rolle angibt, dargestellt. In diesem Zustand wird die Rolle dem Wiederherstellungsverfahren unterzogen, welches in der rechten Bildhälfte veranschaulicht ist. Die Rolle wird auf den Vordrehdurchmesser D_{vor neu} abgedreht, der sich innerhalb des Grundwerkstoffes des Rollenkörpers befindet. Auf diese vorbereitete Rollenmanteloberfläche wird mit dem Schweißzusatzwerkstoff eine wendelförmig umlaufende Schweißraupe erzeugt, wobei der Rollendurchmesser auf den Schweißdurchmesser D_{sch neu} zunimmt. Gleichzeitig bildet sich im Grundwerkstoff des Rollenkörpers eine neue Einbrandzone aus, die durch den Einbranddurchmesser D_{Einbrand neu} begrenzt ist. Anschließend erfolgt das Rückdrehen der Schweißraupenoberfläche auf den neuen Rollennenndurchmesser D_{nen neu}, der allerdings kleiner ist als der Rollennenndurchmesser vor Anwendung des Wiederherstellungsverfahrens.

In Figur 6 ist ein erweitertes Verfahren zur Wiederherstellung einer abgenützten Rolle veranschaulicht, bei dem der ursprüngliche Nenndurchmesser der Strangführungsrolle auch nach Anwendung des Wiederherstellungsverfahrens durch Aufbringen einer Aufbaulage wieder erreicht wird. In der linken Bildhälfte ist die Ausgangslage analog zu Figur 5 dargestellt, wobei der Vordrehdurchmesser Dᵥₒᵣ den Ausgangsdurchmesser für die erstmalige einlagige Aufschweißung angibt. Gemäß der Darstellung in der rechten Bildhälfte wird die Rolle auf einen Vordrehdurchmesser D_{vor neu} abgedreht, der sich innerhalb des Grundwerkstoffes des Rollenkörpers befindet. Auf diese vorbereitete Rollenmanteloberfläche wird in einem oder mehreren Schweißlagen eine Aufbaulage 7 mit einem Schweißzusatzwerkstoff gebildet, der der chemischen Zusammensetzung des Grundwerkstoffes des Rollenkörpers entspricht. Beispielsweise wird auf einen Rollenkörper aus St52-3 für die Aufbaulage ebenfalls ein St52-3 als Schweißzusatzwerkstoff eingesetzt. Die Dicke dieser Aufbaulage orientiert sich am angestrebten Rollennenndurchmesser D_{nen neu} , der mit dem ursprünglichen Nenndurchmesser Dₙₑₙ übereinstimmen soll. Dementsprechend wird mit der Auftragsschweißung der Aufbaulage bis zu einem Aufbaulagendurchmesser D_{Aufbaulage} aufgeschweißt, gegebenenfalls unter Berücksichtigung einer zusätzlichen Oberflächenbearbeitung, der dem Vordrehdurchmesser Dvor bei der erstmaligen einlagigen Aufschweißung entspricht. Damit werden für die einlagige, die Verschleißschicht bildende Aufschweißung, wiederum dieselben Ausgangsbedingungen geschaffen, wie sie bei der erstmaligen einlagigen Aufschweißung bestanden. Nach Durchführung der einlagigen Aufschweißung mit dem erfindungsgemäßen Schweißzusatzwerkstoff erfolgt abschließend ein Rückdrehen auf den neuen Nenndurchmesser D_{nen neu}, der mit dem ursprünglichen Nenndurchmesser Dₙₑₙ übereinstimmt.

Solange der Rollenkörper oder der Rollenmantel über eine ausreichende Schichtdicke an Grundmaterial verfügt, kann dieses Verfahren zur Wiederherstellung einer abgenützten Rolle mehrfach wiederholt werden.

## Patentansprüche

1. Rolle (1) zum Stützen und Transportieren von heißem Gut, insbesondere von stranggegossenen Stahlsträngen, auf einem Rollgang oder in einer Stranggießmaschine, mit einem Rollenkörper, der einen Rollenmantel (2) aus einem Grundwerkstoff und eine durch eine Auftragsschweißung auf dem Grundwerkstoff mit einem Schweißzusatzwerkstoff aufgebrachte Verschleißschicht (6) umfasst, die die Rollenmanteloberfläche (3) einschließt, wobei der Grundwerkstoff des Rollenmantels Stahl ist,
wobei der Grundwerkstoff des Rollenmantels Stahl ist und
bis zu 0,45% C aufweist, wobei die Auftragsschweißung als Einlagenschweißung ausgerührt ist **dadurch gekennzeichnet, dass** die Verschleißschicht (6) zumindest in einem äußeren, die Rollenmanteloberfläche (3) einschließenden Bereich 12,5 bis 14,0% Cr aufweist, und dass die Verschleißschicht zumindest in dem äußeren, die Rollenmanteloberfläche einschließenden Bereich folgende Zusammensetzung aufweist:
12,5 bis 14,0 % Cr
0,10 bis 0,18 % Nb
3,4 bis 4,5 % Ni
0,6 bis 1,0 % Mo
0,12 % N
0,7 % Si
0,6 bis 1,2 % Mn
0,06 bis 0,14 % C
max. 0,025 % S
max. 0,025 % P
Rest Fe und herstellungsbedingte Verunreinigungen wobei die Streubreite der einzelnen Legierungsanteile +/- 5% beträgt.

2. Rolle (1) nach Anspruch 1, **dadurch gekennzeichnet, dass** der Anteil an Deltaferrit in der Verschleißschicht (6), zumindest in dem äußeren, die
Rollenmanteloberfläche (3) schließenden Bereich, weniger als 10 %, vorzugsweise weniger als 5%, beträgt.

3. Rolle (1) nach einem der vorhergehenden Ansprüche, **dadurch gekennzeichnet, dass** der die Rollenmanteloberfläche (3) einschließende
Bereich der Verschleißschicht (6) in einem Dickenbereich von mindestens 1,5 mm, vorzugsweise in einem Dickenbereich von mindestens 2,5 mm, eine gleiche chemische Zusammensetzung aufweist.

4. Schweißzusatzwerkstoff zum Herstellen einer Auftragsschweißung auf einer Bauteiloberfläche, vorzugsweise auf einem Rollenmantel einer Rolle zum Stützen und Transportieren von heißem Gut, insbesondere von stranggegossenen Stahlsträngen auf einem Rollgang oder in einer Stranggießmaschine, wobei die Bauteiloberfläche oder der Rollenmantel der Rolle aus Stahl ist und bis zu 0,45% C enthält,
wobei der Schweißzusatzwerkstoff auf Eisenbasis 16,5 bis 19,0 % Cr enthält **dadurch gekennzeichnet, dass** der Schweißzusatzwerkstoff folgende chemische Zusammensetzung aufweist:
16,5 bis 19,0 % Cr
0,15 bis 0,20 % Nb
4,0 bis 4,5 % Ni
1,0 % Mo
0,12 % N
0,7 % Si
1,2 % Mn
0,03 % C
max. 0,025 % S
max. 0,025 % P
Rest Fe und herstellungsbedingte Verunreinigungen
wobei die Streubreite der einzelnen Legierungsanteile +/- 5% beträgt.

5. Schweißzusatzwerkstoff nach Anspruch 4, **dadurch gekennzeichnet, dass** der Schweißzusatzwerkstoff folgende chemische Zusammensetzung aufweist:
16,5 bis 17,0 % Cr
0,15 bis 0,20 % Nb
4,0 % Ni
1,0 % Mo
0,12 % N
0,7 % Si
1,2 % Mn
0,03 % C
max. 0,025 % S
max. 0,025 % P
Rest Fe und herstellungsbedingte Verunreinigungen wobei die Streubreite der einzelnen Legierungsanteile +/- 5% beträgt.

6. Schweißzusatzwerkstoff nach Anspruch 4, **dadurch gekennzeichnet, dass** der Schweißzusatzwerkstoff folgende chemische Zusammensetzung aufweist:
18,5 bis 19,0 % Cr
0,15 bis 0,20 % Nb
4,5 % Ni
1,0 % Mo
0,12 % N
0,7%Si
1,2 % Mn
0,03 % C
max. 0,025 % S
max. 0,025 % P
Rest Fe und herstellungsbedingte Verunreinigungen
wobei die Streubreite der einzelnen Legierungsanteile +/- 5% beträgt.

7. Schweißdraht zur Durchführung einer Auftragschweißung auf einer Bauteiloberfläche, vorzugsweise auf einem Rollenmantel einer Rolle zum Stützen und Transportieren von heißem Gut, insbesondere von stranggegossenen Stahlsträngen auf einem Rollgang oder in einer Stranggießmaschine, **dadurch gekennzeichnet, dass** der Schweißdraht oder die Schweißelektrode einen Schweißzusatzwerkstoff mit Legierungsbestandteilen oder mit einer chemischen Zusammensetzung nach einem der Ansprüche 4 bis 6 umfasst.

## Claims

1. Roll (1) for supporting and conveying hot material, in particular continuously cast steel strands, on a roller table or in a continuous casting machine, said roll having a roll body, which comprises a roll shell (2) of a base material and a wearing layer (6), which is applied to the base material by build-up welding using a weld filler and encloses the roll shell surface (3), wherein the base material of the roll shell is steel, wherein the base material of the roll shell is steel and contains up to 0.45% C, wherein the build-up welding is in the form of single-layer welding, **characterized in that** the wearing layer (6) contains 12.5 to 14.0% Cr at least in an outer region which encloses the roll shell surface (3), and **in that** the wearing layer has the following composition at least in the outer region which encloses the roll shell surface:
12.5 to 14.0% Cr
0.10 to 0.18% Nb
3.4 to 4.5% Ni
0.6 to 1.0% Mo
0.12% N
0.7% Si
0.6 to 1.2% Mn
0.06 to 0.14% C
max. 0.025% S
max. 0.025% P
remainder Fe and manufacturing related impurities, where the spread of the individual alloy components is +/- 5%.

2. Roll (1) according to Claim 1, **characterized in that** the proportion of delta ferrite in the wearing layer (6) is less than 10%, preferably less than 5%, at least in the outer region which encloses the roll shell surface (3).

3. Roll (1) according to either of the preceding claims, **characterized in that** the region of the wearing layer (6) which encloses the roll shell surface (3) has an identical chemical composition in a thickness range of at least 1.5 mm, preferably in a thickness range of at least 2.5 mm.

4. Weld filler for producing a build-up weld on a component surface, preferably on a roll shell of a roll for supporting and conveying hot material, in particular continuously cast steel strands, on a roller table or in a continuous casting machine, wherein the component surface or the roll shell of the roll is made of steel and contains up to 0.45% C, wherein the iron-based weld filler contains 16.5 to 19.0% Cr, **characterized in that** the weld filler has the following chemical composition: 16.5 to 19.0% Cr
0.15 to 0.20% Nb
4.0 to 4.5% Ni
1.0% Mo
0.12% N
0.7% Si
1.2% Mn
0.03% C
max. 0.025% S
max. 0.025% P
remainder Fe and manufacturing-related impurities,
where the spread of the individual alloy components is +/-5%.

5. Weld filler according to Claim 4, **characterized in that** the weld filler has the following chemical composition: 16.5 to 17.0% Cr
0.15 to 0.20% Nb
4.0% Ni
1.0% Mo
0.12% N
0.7% Si
1.2% Mn
0.03% C
max. 0.025% S
max. 0.025% P
remainder Fe and manufacturing-related impurities,
where the spread of the individual alloy components is +/-5%.

6. Weld filler according to Claim 4, **characterized in that** the weld filler has the following chemical composition: 18.5 to 19.0% Cr
0.15 to 0.20% Nb
4.5% Ni
1.0% Mo
0.12% N
0.7% Si
1.2% Mn
0.03% C
max. 0.025% S
max. 0.025% P
remainder Fe and manufacturing-related impurities,
where the spread of the individual alloy components is +/-5%.

7. Welding wire for carrying out build-up welding on a component surface, preferably on a roll shell of a roll for supporting and conveying hot material, in particular continuously cast steel strands, on a roller table or in a continuous casting machine, **characterized in that** the welding wire or the welding electrode comprises a weld filler having alloy components or having a chemical composition according to one of Claims 4 to 6.

## Revendications

1. Rouleau (1) de soutien de transport de produits chauds, en particulier de barres d'acier coulées en continu, sur une piste à rouleaux ou dans une machine de coulée continue, le rouleau présentant un corps de rouleau qui comporte une enveloppe (2) de rouleau en un matériau de base et une couche d'usure (6) qui est appliquée par soudage d'apport d'un matériau d'apport sur le matériau de base et qui englobe la surface (3) de l'enveloppe du rouleau, le matériau de base de l'enveloppe du rouleau étant l'acier,
le matériau de base de l'enveloppe du rouleau étant l'acier et présentant jusqu'à 0,45 % de C, le soudage d'apport étant exécuté comme soudage en une couche,
**caractérisé en ce que**
au moins dans une zone extérieure qui englobe la surface (3) de l'enveloppe du rouleau, la couche d'usure (6) présente de 12,5 à 14,0 % de Cr et
**en ce qu'**au moins dans la partie extérieure qui englobe la surface de l'enveloppe du rouleau, la couche d'usure présente la composition suivante:
12,5 à 14,0 % de Cr,
0,10 à 0,18 % de Nb,
3,4 à 4,5 % de Ni,
0,6 à 1,0 % de Mo,
0,12 % de N,
0,7 % de Si,
0,6 % à 1,2 % de Mn,
0,06 à 0,14 de C,
au plus 0,025 % de S,
au plus 0,025 % de P,
le reste étant Fe et les impuretés inévitables, la plage de diffusion des différentes fractions d'alliage étant de +/- 5 %.

2. Rouleau (1) selon la revendication 1, **caractérisé en ce qu'**au moins dans la partie extérieure de la couche d'usure (6), celle qui englobe la surface (3) de l'enveloppe du rouleau, la teneur en ferrite delta est de moins de 10 % et de préférence de moins de 5 %.

3. Rouleau (1) selon l'une des revendications précédentes, **caractérisé en ce que** la partie de la couche d'usure (6) qui englobe la surface (3) de l'enveloppe du rouleau présente une composition chimique uniforme dans une plage d'épaisseur d'au moins 1,5 mm et de préférence dans une plage d'épaisseur d'au moins 2,5 mm.

4. Matériau d'apport de soudure destiné à former un soudage d'apport sur la surface d'un composant, de préférence sur l'enveloppe d'un rouleau de soutien de transport de produits chauds, en particulier de barres d'acier coulées en continu, sur une piste à rouleaux ou dans une machine de coulée continue, la surface du composant ou l'enveloppe du rouleau étant formée d'acier et contenant jusque 0,45 % de C,
le matériau d'apport de soudure étant à base de fer et contenant de 16,5 à 19,0 % de Cr,
**caractérisé en ce que**
le matériau d'apport de soudure présente la composition chimique suivante :
16,5 à 19,0 % de Cr,
0,15 à 0,20 % de Nb,
4,0 à 4,5 % de Ni,
1,0 % de Mo,
0,12 % de N,
0,7 % de Si,
1,2 % de Mn,
0,03 % de C,
au plus 0,025 % de S,
au plus 0,025 % de P,
le reste étant Fe et les impuretés inévitables,
la plage de dispersion des différentes portions d'alliage étant de +/- 5 %.

5. Matériau d'apport de soudure selon la revendication 4, **caractérisé en ce que** le matériau d'apport de soudure présente la composition chimique suivante :
16,5 à 17,0 % de Cr,
0,15 à 0,20 % de Nb,
4,0 % de Ni,
1,0 % de Mo,
0,12 % de N,
0,7 % de Si,
1,2 % de Mn,
0,03 % de C,
au plus 0,025 % de S,
au plus 0,025 % de P,
le reste étant Fe et les impuretés inévitables,
la plage de dispersion des différentes portions d'alliage étant de +/- 5 %.

6. Matériau d'apport de soudure selon la revendication 4, **caractérisé en ce que** le matériau d'apport de soudure présente la composition chimique suivante :
18,5 à 19,0 % de Cr,
0,15 à 0,20 % de Nb,
4,5 % de Ni,
1,0 % de Mo,
0,12 % de N,
0,7 % de Si,
1,2 % de Mn,
0,03 % de C,
au plus 0,025 % de S,
au plus 0,025 % de P,
le reste étant Fe et les impuretés inévitables,
la plage de dispersion des différentes portions d'alliage étant de +/- 5 %.

7. Fil de soudure destiné à réaliser un soudage d'apport sur la surface d'un composant, de préférence sur l'enveloppe d'un rouleau de soutien de transport de produits chauds, en particulier de barres d'acier coulées en continu, sur une piste à rouleaux ou dans une machine de coulée continue,
**caractérisé en ce que**
le fil de soudure ou l'électrode de soudage comportent un matériau d'apport de soudure dont les composants d'alliage ou la composition chimique sont celles de l'une des revendications 4 à 6.
